(19) Europäisches Patentamt

European Patent Office

Office européen des brevets

(11) EP 0 628 955 B1

(12) **EUROPEAN PATENT SPECIFICATION**

(45) Date of publication and mention
of the grant of the patent:
**19.05.1999   Bulletin 1999/20**

(51) Int Cl.[6]: **G11B 7/09**, G11B 7/135

(21) Application number: **94304160.8**

(22) Date of filing: **09.06.1994**

(54) **Optical head**

Optischer Kopf

Tête optique

(84) Designated Contracting States:
**DE GB NL**

(30) Priority:   **11.06.1993   KR 9310646**

(43) Date of publication of application:
**14.12.1994   Bulletin 1994/50**

(73) Proprietor: **SAMSUNG ELECTRONICS CO., LTD.**
**Suwon-city, Kyungki-do 441-373 (KR)**

(72) Inventors:
 • **Hwang, Won-Jae,**
**c/o SAMSUNG ELECTRONICS CO., LTD.**
**Suwon-city, Kyungki-do (KR)**
 • **Lee, Moon-gyu,**
**c/o SAMSUNG ELECTRONICS CO., LTD.**
**Suwon-city, Kyungki-do (KR)**

 • **Mun, Jong-kuk,**
**c/o SAMSUNG ELECTRONICS CO., LTD.**
**Suwon-city, Kyungki-do (KR)**

(74) Representative: **Neill, Alastair William et al**
**Appleyard**
**Lees & Co.**
**15 Clare Road**
**Halifax West Yorkshire HX1 2HY (GB)**

(56) References cited:
**EP-A- 0 305 169**          **EP-A- 0 459 764**
**US-A- 5 066 138**

 • **PATENT ABSTRACTS OF JAPAN vol. 14, no. 430
(P-1106) 14 September 1990 & JP-A-02 166 628
(NEC CORP) 27 June 1990**
 • **PATENT ABSTRACTS OF JAPAN vol. 15, no. 376
(P-1255) 24 September 1991 & JP-A-03 147 527
(OLYMPUS OPTICAL CO) 24 June 1991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an optical head, and particularly, to an optical head for use in an apparatus such as a compact disk player, a CD-ROM, etc., for reading out recorded information using an optical beam.

Generally, an optical head emits an optical beam generated from a laser diode to an optical recording medium, and converts the optical beam reflected from the optical recording medium into an electrical signal using a photodiode. A reproducing system using the optical head ensures that the beam projected from the optical head is exactly focused on the recording medium using an astigmatism method, a critical angle detection method, etc. Also, the reproducing system controls the tracking of the optical head using a 3-beam method, a push-pull method, etc.

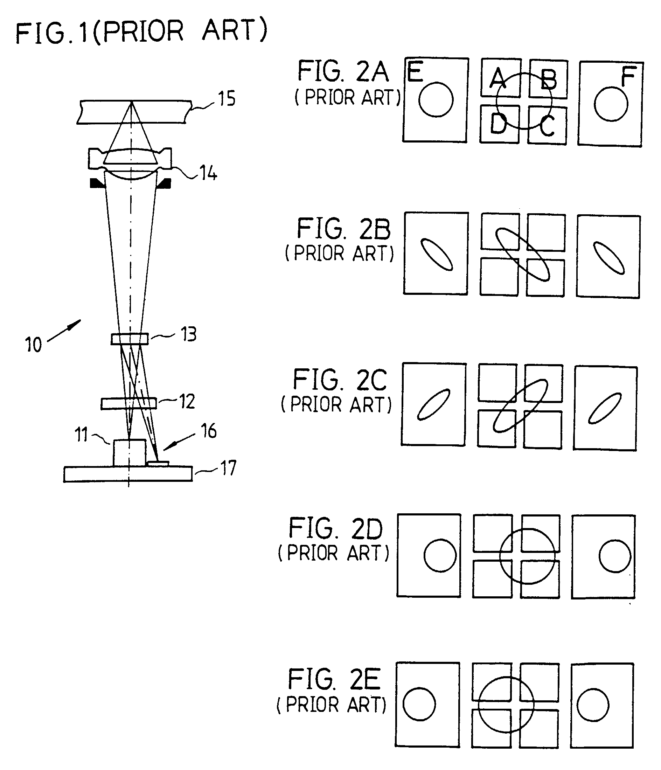

A known technique uses six photodiodes, in such a manner that a focusing error is detected by the astigmatism method and a tracking error is detected by the 3-beam method. This conventional technology will be described below with reference to Figures 1 and 2.

Figure 1 shows a conventional optical head 10 schematically. Figures 2A through 2E are conceptual diagrams for explaining focusing errors and tracking errors in the apparatus shown in Figure 1, in which spots formed on the six photodiodes are illustrated.

Optical head 10 of Figure 1 includes a light receiving portion 16 having a laser diode 11 for generating a laser beam and six photodiodes A through F for generating electrical signals. Between optical storage medium 15 in which the information is recorded and laser diode 11 are disposed in turn grating 12, hologram lens 13 and an objective lens 14 in the direction toward optical storage medium 15 from laser diode 11. Hologram lens 13 controls the positions of the beams reflected from optical storage medium 15, so as to be incident to photodiodes A through F of light receiving portion 16. A support plate 17 keeps a constant distance between laser diode 11 and light receiving portion 16.

The beam projected from laser diode 11 is separated into three beams by grating 12. The respectively separated beams passing through hologram lens 13 are diffracted into a plurality of beams each of which has an order. The beam which is diffracted in the order of zero is collected by objective lens 14 and incident to optical storage medium 15. The beams which are incident to and reflected from optical storage medium 15 pass through objective lens 14 again and then are incident to hologram lens 13. Hologram lens 13 diffracts the beams incident from objective lens 14 again to generate the diffracted beams having a number of orders. The beams excluding the zero-order beam among the diffracted beams are projected to grating 12. Grating 12 separates the diffracted beam into three beams. The separated beams are incident to light receiving portion 16 including six photodiodes A through F. The beams incident to light receiving portion 16 form spots on the surface of the six diodes. As shown in Figures 2A through 2C, the shapes of these light spots are varied according to a degree of the focusing errors. The relative brightness of the light spots formed on photodiodes E and F located in the periphery thereof is varied according to a degree of the tracking errors, which is not shown in the drawings. The focusing error (FE) and the tracking error (TE) are calculated by the following equations.

$$FE = (A + C) - (B + D)$$

$$TE = E - F$$

The character symbols on the righthand side in the above equations represent quantities of light or electrical signals of the photodiodes corresponding to the respective characters. In case of the spots represented as shown in Figure 2A, the reproducing system detects a focusing error FE of "0". By the way, since optical head 10 uses a specific wavelength (in case of the compact disk, 780nm in general) laser beam, the locations of hologram lens 13 and photodiodes A through F are determined by a diffraction angle of a first-order beam among the beams incident to light receiving portion 16.

However, as it can be generally seen, the wavelength of the laser beam is varied in correspondence to temperature change. Thus, when the temperature of optical head 10 is varied by the peripheral temperature change, the diffraction angle of the light passing through hologram lens 13 is varied. The locations of the spots formed on the photodiodes by the variation of the diffraction angle are moved to the left or to the right, which are shown in Figures 2D and 2E. The central position of the light spot departs from the permissible central position of photodiodes A, B, C and D in optical head 10 due to the variation of the wavelength and the reproducing system cannot perform an exact focusing due to an abnormal focusing error including an offset.

Another prior art technology which uses a hologram lens in an optical lens is disclosed in U.S. Patent No. 4,731,772 issued on March 15, 1988. The above prior art technology uses a hologram lens having functions of both a beam splitter and a biprism in an optical head. Since a semiconductor laser diode and a photodiode are attached to an identical member to identically move the semiconductor laser diode and the photodiode, the optical head of the above prior art operates correctly irrespective of any vibration. However, the above prior art cannot solve the light spot location variation generated due to the wavelength variation of the diffracted beam according to temperature change.

European Patent application EP-A-0459764 (Sharp) reflecting the preamble of independent claim 1 discloses an optical head device having an optical system comprising a light source, a shaping prism, a diffracting element and a photodetector. The light source emits light whose intensity distribution has an elliptic shape in its cross-section orthogonal to the optical axis. The shaping prism directs the light to a recording medium after shaping the intensity distribution thereof into a circular shape. The diffracting element has diffracting regions formed by at least one division line substantially parallel to a reference direction. The light reflected from the recording medium forms an elliptic bright portion on the diffracting element. The photodetector is divided by a plurality of division lines, at least one of which is parallel to the reference direction. When there is no focus error, the diffracting element diffracts the reflected light so as to converge it on the division line substantially parallel to the reference direction in the photodetector. For example, when the shaping prism is adapted to shape the elliptic intensity distribution with respect to its minor axis direction, the optical system is arranged so that the major axis of the bright portion is parallel to the division line of the diffracting element. Thus, it is possible to suppress offsets in focusing control due to wavelength variations of light.

EP-A-0305169 (Sharp) discloses an optical pickup apparatus having an optical grating assembly disposed between the light source and the information disk which comprises a diffraction grating and a holographic grating for directing part of the light beam reflected by the disk to a photodetector. The diffraction and holographic grating are formed integrally with each other as part of the grating assembly.

Therefore, with a view to solving or reducing the above problems, it is an aim of preferred embodiments of the present invention to provide an optical head capable of detecting focusing errors irrespective of offset even in the case of diffraction angle variation of the light beam caused by changes in the peripheral temperature.

According to a first aspect of the present invention, there is provided an optical head for reading information stored in a optical storage medium said optical head comprising: light emitting means for emitting a light beam having a predetermined wavelength; diffraction means located between the optical storage medium and said light emitting means, and arranged to diffract the beams reflected from the optical storage medium so that the diffracted beams have an inclined axis with respect to an axis formed by the optical storage medium and said light emitting means, to produce thereby a spatial change in response to a focus change; and light detection means which is disposed on a path of the light beam which is incident to and diffracted by said diffraction means from the optical storage medium, the optical head being characterised in that the diffraction means comprises two types of hologram elements which separate the light beam incident from said optical storage means to said diffraction means into two light beams of which has a mutually different diffraction angle, the diffraction means being arranged to rotate the respectively separated beams by predetermined angles and transmit the rotated beams to said light detection means and form light spots on the light detection means irrespective of a change in light wave length due to a temperature change.

Said hologram elements may comprise a first hologram element and a second hologram element each of which rotates the light beam emitted from each hologram element by an identical angle.

Said light detection means preferably comprises a plurality of photodiodes each of which has a portion parallel to the diffraction direction of the light beam which is longer than that of a portion perpendicular to the diffraction direction.

Preferably, said light detection means comprises four photodiodes which are disposed adjacent to each other, so as to detect a focusing error using a division astigmatism method and detect a tracking error using a push-pull method.

Said light detection means may be arranged so as to move together with said light emitting means.

The invention includes an optical disk player including an optical head in accordance with the first aspect of the invention.

For a better understanding of the invention, and to show how embodiments of the same may be carried into effect, reference will now be made, by way of example, to the accompanying diagrammatic drawings, in which:

Figure 3 is a schematic diagram of an optical head according to a preferred embodiment of the present invention;

Figures 4A and 4B are conceptual diagrams showing patterns of the light beams projected onto photodiodes of the optical head of Figure 1 by means of a diffraction and separation portion;

Figures 5A and 5B are views showing the light beams rotated by hologram elements of the diffraction and separation portion;

Figure 6 shows light spots which are formed in the neighbourhood of a light receiving portion of the optical head by the hologram elements during correct focusing; and

Figures 7A through 7E are views showing the light spots which are produced on the photodiodes by movement of the objective lens in the focusing direction.

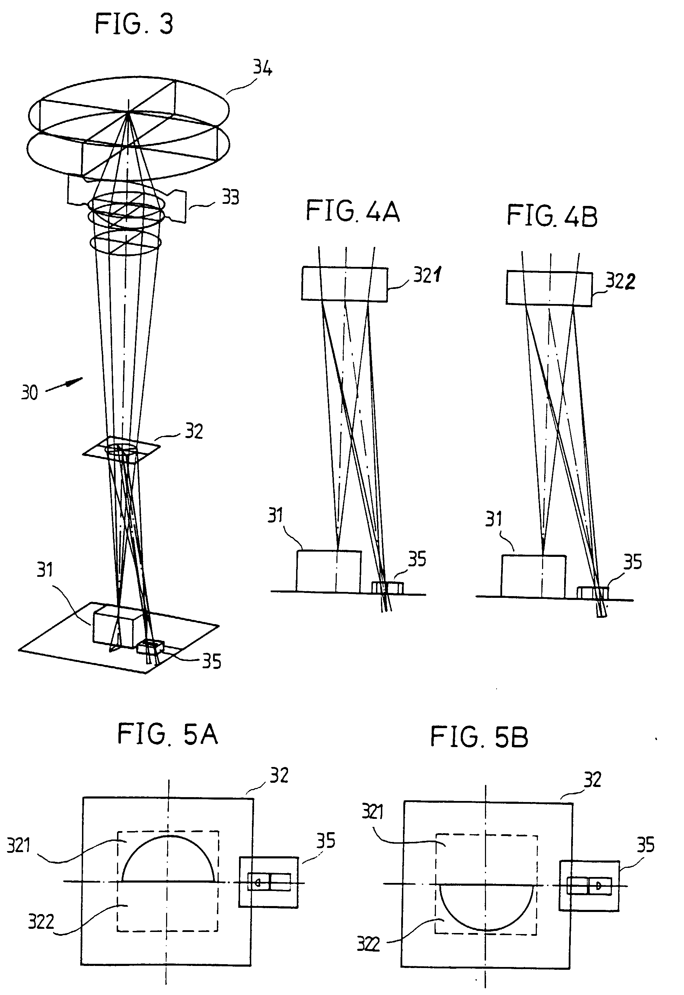

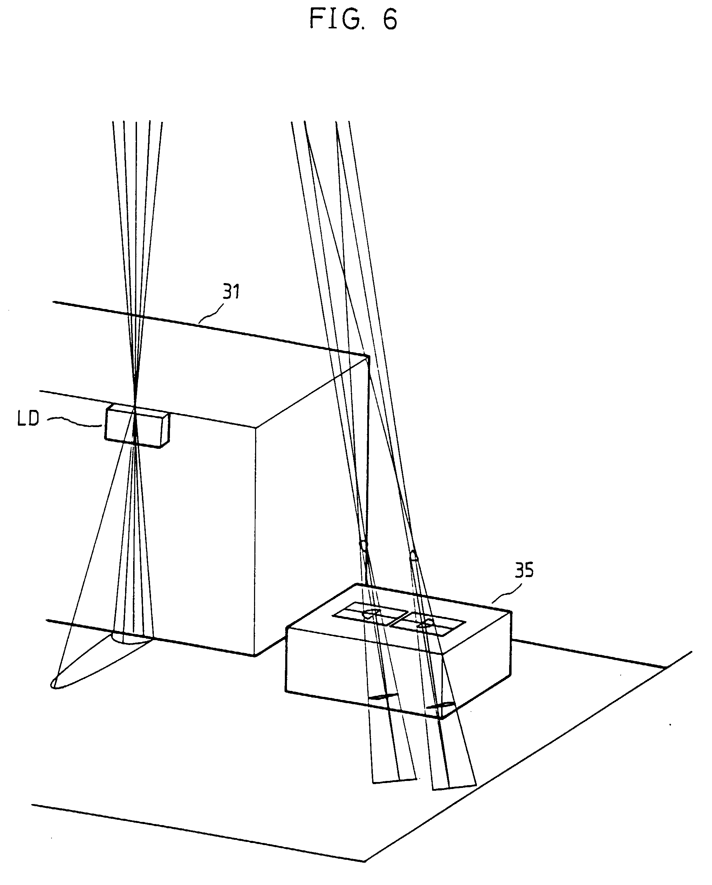

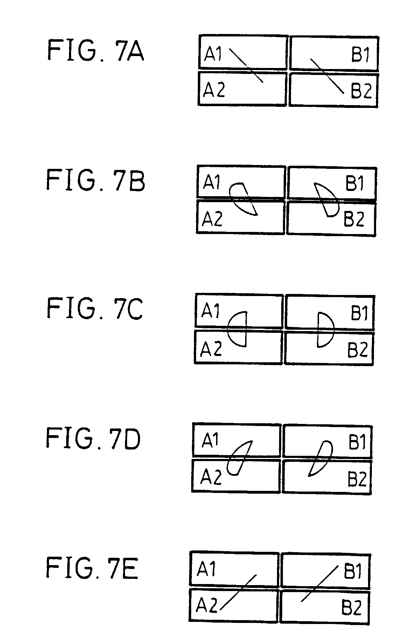

Referring to Figure 3, an optical head 30 includes a light emitting portion 31 having a laser diode and a light receiving portion 35 which is fixed at a predetermined position with respect to light emitting portion 31 and having four photodiodes A1, A2, B1 and B2. An objective lens 33 for focusing the light beam projected from light emitting portion 31 onto an optical disk 34 is located in front of light emitting portion 31. A diffraction and separation portion 32 is disposed between light emitting portion 31 and objective lens 33. The diffraction and separation portion 32 has functions of both a light separator and a biprism, as in the hologram lens disclosed in U.S. Patent No. 4,731,772. Thus, diffraction and separation portion 32 diffracts the beam incident from light emitting portion 31 and collects only the light beams which are diffracted in the order of zero among the diffracted beams on optical disk 34. Diffraction and separation portion 32 has a function of rotating the light beams which are incident from optical disk 34 at a predetermined angle. The diffraction and separation portion 32 diffracts the light beams incident from objective lens 33 at a different angle to each other, and includes a first hologram element 321 and a second hologram element 322 each being called a holographic optical element. Diffraction and separation portion 32 controls the positions of the light spots, in such a manner that the light spots are focused on the central position of photodiodes A1, A2, B1 and B2 in light receiving portion 35 at a normal temperature of 25°C as is conventional. The laser diode LD and photodiodes A1, A2, B1 and B2 are shown in Figures 6 and 7 to be described below.

If optical head 30 starts to operate, the light beam emitted from laser diode LD in light emitting portion 31 is diffracted by diffraction and separation portion 32 and only the zero-order diffracted beam is incident to objective lens 33. The zero-order diffracted beam focused on optical disk 34 by objective lens 33 is reflected by the optical disk 34 on which pits are engraved. The reflected light beam passes through objective lens 33 again, to be incident to diffraction and separation portion 32. The first and second hologram elements 321 and 322 of diffraction and separation portion 32 rotate the incident light beam and emits the rotated light beam so that counterclockwise rotated light spots are formed on photodiodes A1, A2, B1 and B2 of light receiving portion 35.

Figure 4A shows a proceeding path of the light beam which is diffracted so as to proceed to two photodiodes A1 and A2 by first hologram element 321. Figure 4B shows a proceeding path of the light beam which is diffracted so as to proceed to the other two photodiodes B1 and B2 by second hologram element 322.

Figures 5A and 5B show the light spot formed on the photodiode in a pattern where the light beam incident to the hologram element is rotated. Particularly, Figure 5A shows the light spots formed on photodiodes A1 and A2 by first hologram element 321. Figure 5B shows the light spots formed on photodiodes B1 and B2 by second hologram element 322.

Figure 6 shows the light spot which is formed in the neighbourhood of light receiving portion 35 by hologram elements 321 and 322, during correct focusing. Figures 7A and 7E show the respective light spots formed on photodiodes A1, A2, B1 and B2 when a distance between objective lens 33 and optical disk 34 is varied. A degree of collecting the light beams diffracted by hologram elements 321 and 322 is varied according to a distance advanced from hologram elements 321 and 322. Thus, when both the focusing error FE and tracking error TE are zero, light spots are produced on photodiodes A1, A2, B1 and B2 and a focal line (called a front focal line) is formed between the hologram element and the photodiode and a virtual focal line (called a rear focal line) is formed at a position beyond the photodiode.

When the spot of the light beam incident to one of hologram elements 321 and 322 has a half-moon shape, if focusing error FE and tracking error TE are zero, the spots of the same half-moon shape are formed on photodiodes A1 and A2, or B1 and B2 corresponding to hologram elements 321 and 322, respectively. Such light spots are produced in such a manner that the shapes are rotated counterclockwise by 90° on photodiodes A1, A2, B1 and B2, as shown in Figures 5A and 5B. When the focus of the light beam on optical disk 34 is exactly formed on optical disk 34, the light spot is formed as shown in Figure 7C. On the other hand, when the focuses of the light beams are not located on optical disk 34, the optical spots shown in figures 7A, 7B, 7D and 7E are formed on photodiodes A1, A2, B1 and B2. A distance between optical disk 34 and objective lens 33 when objective lens 33 forms a correct focus on optical disk 34 is assumed as a working distance, and if an actual distance between optical disk 34 and objective lens 33 is shorter than the working distance, the light spots of Figures 7A and 7B are detected by light receiving portion 35 including photodiodes A1, A2, B1 and B2. On the other hand, if the actual distance is longer than the working distance, the light spots of Figures 7D and 7E are detected by light receiving portion 35.

If the temperature rises or falls by the heat-emission of the optical head or the variation of the peripheral circumstance during performing a focus control of the light beam by a focusing servo (not shown), the light beam used for the detection of the focusing error and tracking error is changed in wavelength. Thus, a diffraction angle of the light beam diffracted by hologram elements 321 and 322 in diffraction and separation portion 32 is also altered. However, since hologram elements 321 and 322 constituting diffraction and separation portion 32 are constituted so that the change of the diffraction angle of the emitted light beam occurs in the lengthwise directions of photodiodes A1, A2, B1 and B2, light spots are formed on the photodiodes irrespective of the peripheral temperature. Thus, the optical head can detect the information stored in optical disk 34 exactly.

Using the light spots detected by light receiving portion 35, the equations for calculating the focusing error FE and tracking error TE are as follows.

$$FE = (A1 + B2) - (A2 + B1)$$

$$TE = (A1 + A2) - (B2 + B2)$$

When the front focal line spot of Figure 7A or the light spot of Figure 7B is detected by light receiving portion 35, since the actual distance is much shorter than the actual distance, the focus servo (not shown) controls the movement of objective lens 33 to become further away from optical disk 34. Whereas, if the light spot detected by light receiving portion 35 has a shape shown in Figure 7D or 7E, the focus servo moves the objective lens 33 to become closer to optical disk 34. Thus, the light focus of objective lens 33 onto optical disk 34 may be more exactly controlled. The focusing error FE is determined by the relative light quantities of the light beams incident to photodiodes A1, A2, B1 and B2. Assuming that the actual distance is shorter than the focus distance as shown in Figure 7B, when the light spots formed on photodiodes A1 and A2 by hologram element 321 are compared with each other, the light spot formed on photodiode A1 is larger than that formed on photodiode A2. Thus, the focus servo detects focusing error FE using the conventional astigmatism method which uses four photodiodes A1, A2, B1 and B2. As a result, objective lens 33 is moved according to the detected focusing error. The light quantity incident to two photodiodes A1 and A2 is different from that of the other two photodiodes B1 and B2, according to a size of the tracking error TE, which is not, however, shown in the drawings. Thus, if the conventional push-pull method is used, the tracking servo can control the tracking of the optical head according to the detected tracking error.

As described above, the diffraction and separation portion rotates the diffracted light beam at a predetermined angle, to accordingly move the light beam so that its diffraction angle is altered along predetermined directions of the photodiodes. Also, the arrangement utilises photodiodes capable of receiving the light spots of the diffracted light beam, even though the formation location of the light spot is varied according to a change in wavelength of the beam passing through the diffraction and separation portion. Thus, since a light beam of which the diffraction angle is changed due to wavelength alteration can still be received, focusing error and tracking error which do not include the offset can be detected irrespective of the peripheral temperature change.

## Claims

1.  An optical head (30) for reading information stored in a optical storage medium (34) said optical head (30) comprising:

    light emitting means (31) for emitting a light beam having a predetermined wavelength;

    diffraction means (32) located between the optical storage medium (34) and said light emitting means (31), and arranged to diffract the beams reflected from the optical storage medium (34) so that the diffracted beams have an inclined axis with respect to an axis formed by the optical storage medium (34) and said light emitting means (31), to produce thereby a spatial change in response to a focus change; and

    light detection means (35) which is disposed on a path of the light beam which is incident to and diffracted by said diffraction means (32) from the optical storage medium (34), the optical head being characterised in that the diffraction means (32) comprises two types of hologram elements (321, 322) which separate the light beam incident from said optical storage means (34) to said diffraction means (32) into two light beams of which has a mutually different diffraction angle, the diffraction means (32) being arranged to rotate the respectively separated beams by predetermined angles and transmit the rotated beams to said light detection means (35) and form light spots on the light detection means (35) irrespective of a change in light wave length due to a temperature change.

2.  An optical head according to claim 1, wherein said hologram elements are a first hologram element (321)and a second hologram element (322) each of which rotates the light beam emitted from each hologram element by an identical angle.

3.  An optical head according to claims 1 to 2, wherein said light detection means (35) comprises a plurality of photodiodes (A1, A2, B1, B2) each of which has a dimension parallel to the diffraction direction of the light beam which is longer than that of a dimension perpendicular to the diffraction direction.

4.  An optical head according to any of the preceding claims, wherein said light detection means (35) comprises four photodiodes (A1, A2, B1, B2) which are disposed adjacent to each other, so as to detect a focusing error using a division astigmatism method and detect a tracking error using a push-pull method.

5.  An optical head according to any of the preceding claims, wherein said light detection means (35) is arranged so as to move together with said light emitting means.

6.  An optical disk player including an optical head according to any of the preceding claims.

**Patentansprüche**

1. Optischer Kopf (30) zum Lesen von Informationen, die in einem optischen Speichermedium (34) gespeichert sind, wobei der optische Kopf (30) aufweist:

   eine Licht emittierende Einrichtung (31) zum Emittieren eines Lichtstrahls, der eine vorbestimmte Wellenlänge besitzt; ein Beugungselement (32), das zwischen das optische Speichermedium (34) und das Licht emittierende Element (31) gelegt ist und so angeordnet ist, um die Strahlen, die von dem optischen Speichermedium (34) reflektiert sind, so zu beugen, daß die gebeugten Strahlen eine Neigungsachse in Bezug auf eine Achse besitzen, die durch das optische Speichermedium (34) und das Licht emittierende Element (31) gebildet ist, um dadurch eine räumliche Änderung in Abhängigkeit einer Fokusänderung zu produzieren; und ein Lichterfassungselement (35), das auf einem Weg des Lichtstrahls angeordnet ist, der auffallend ist auf und durch das Beugungselement (32) von dem optischen Speichermedium (34) gebeugt wird, wobei der optische Kopf dadurch gekennzeichnet ist, daß das Beugungselement (32) zwei Typen von Hologrammelementen (321, 322) aufweist, die den Lichtstrahl, der von dem optischen Speichermedium (34) auf das Beugungselement (32) einfällt, in zwei Lichtstrahlen separieren, die einen gegenseitig unterschiedlichen Beugungswinkel haben, wobei das Beugungselement (32) so angeordnet ist, um die jeweils separierten Strahlen um vorbestimmte Winkel zu drehen und die gedrehten Strahlen zu dem Lichterfassungselement (35) zu übertragen und Lichtflecke auf dem Lichterfassungselement (35) unabhängig einer Änderung in der Lichtwellenlänge aufgrund einer Temperaturänderung zu bilden.

2. Optischer Kopf nach Anspruch 1, wobei die Hologrammelemente ein erstes Hologrammelement (321) und ein zweites Hologrammelement (322) sind, wobei jedes davon den Lichtstrahl, der von jedem Hologrammelement emittiert ist, um einen identischen Winkel dreht.

3. Optischer Kopf nach den Ansprüchen 1 bis 2, wobei das Lichterfassungselement (35) eine Vielzahl von Photodioden (A1, A2, B1, B2) aufweist, von denen jede eine Dimension parallel zu der Beugungsrichtung des Lichtstrahls besitzt, die länger als diejenige einer Dimension senkrecht zu der Beugungsrichtung ist.

4. Optischer Kopf nach einem der vorhergehenden Ansprüche, wobei das Lichterfassungselement (35) vier Photodioden (A1, A2, B1, B2) aufweist, die angrenzend aneinander angeordnet sind, um so einen Fokussierungsfehler unter Verwendung eines Divisions-Astigmatismus-Verfahrens zu erfassen und einen Spurungsfehler unter Verwendung eines Push-Pull- bzw. Zweirichtungs-Verfahrens zu erfassen.

5. Optischer Kopf nach einem der vorhergehenden Ansprüche, wobei das Lichterfassungselement (35) so angeordnet ist, um sich zusammen mit dem Licht emittierenden Element zu bewegen.

6. Abspielgerät für eine optische Platte, das einen optischen Kopf gemäß einem der vorhergehenden Ansprüche umfaßt.

**Revendications**

1. Tête optique (30) pour lire des informations stockées sur un support d'informations optique (34), comportant :

   - des moyens d'émission de lumière (31) pour émettre un faisceau lumineux présentant une longueur d'onde prédéterminée ;
   - des moyens de diffraction (32) situés entre le support d'informations optique (34) et les moyens d'émission de lumière (31) et disposés de manière à diffracter les faisceaux réfléchis à partir du support d'informations optique (34), de telle sorte que les faisceaux diffractés aient un axe incliné par rapport à un axe défini par le support d'informations optique (34) et par les moyens d'émission de lumière (31), pour produire ainsi un changement dans l'espace en réaction à un changement de focalisation ; et
   - des moyens de détection de lumière (35) disposés sur une trajectoire du faisceau lumineux qui arrive sur le support d'informations optique (34) et qui est diffracté à partir de celui-ci par les moyens de diffraction (32),

   caractérisée en ce que les moyens de diffraction (32) comportent deux types d'éléments hologrammes (321, 322) qui séparent le faisceau lumineux allant du support d'informations optique (32) aux moyens de diffraction (32) en deux faisceaux lumineux présentant des angles de diffraction différents, les moyens de diffraction (32) étant disposés de manière à tourner les faisceaux séparés respectifs suivant des angles prédéterminés et pour transmettre les faisceaux tournés aux moyens de détection de lumière (35) et former des points lumineux sur ceux-ci indépendamment d'une variation de longueur d'onde lumineuse due à la variation de température.

2. Tête optique selon la revendication 1, dans laquelle les éléments hologrammes consistent en un premier élément hologramme (321) et un second élément hologramme (322) qui tournent le faisceau lumineux émis à partir de chaque élément hologramme suivant un angle identique.

3. Tête optique selon la revendication 1 ou 2, dans laquelle les moyens de détection de lumière (35) comportent plusieurs photodiodes (A1, A2, B1, B2) qui présentent chacune une dimension parallèle au sens de diffraction du faisceau lumineux qui est plus longue qu'une dimension perpendiculaire au sens de diffraction.

4. Tête optique selon l'une quelconque des revendications précédentes, dans laquelle les moyens de détection de lumière (35) comportent quatre photodiodes (A1, A2, B1, B2) qui sont disposées les unes auprès des autres de manière à détecter une erreur de focalisation en utilisant une méthode d'astigmatisme à division, et à détecter une erreur d'alignement en utilisant une méthode symétrique.

5. Tête optique selon l'une quelconque des revendications précédentes, dans laquelle les moyens de détection de lumière (35) sont disposés de manière à se déplacer avec les moyens d'émission de lumière.

6. Lecteur de disque optique comportant une tête optique selon l'une quelconque des revendications précédentes.

FIG.1(PRIOR ART)

FIG. 2A
( PRIOR ART)

FIG. 2B
(PRIOR ART)

FIG. 2C
(PRIOR ART)

FIG. 2D
(PRIOR ART)

FIG. 2E
(PRIOR ART)

FIG. 3

FIG. 4A

FIG. 4B

FIG. 5A

FIG. 5B

## FIG. 6

FIG. 7A

| A1 | | B1 |
|----|----|----|
| A2 | | B2 |

FIG. 7B

| A1 | | B1 |
|----|----|----|
| A2 | | B2 |

FIG. 7C

| A1 | | B1 |
|----|----|----|
| A2 | | B2 |

FIG. 7D

| A1 | | B1 |
|----|----|----|
| A2 | | B2 |

FIG. 7E

| A1 | | B1 |
|----|----|----|
| A2 | | B2 |